# NEW EUROPEAN PATENT SPECIFICATION

(11) **EP 0 498 585 B2**
(45) Date of publication and mention of the opposition decision: **06.09.2000**
(45) Mention of the grant of the patent: 16.10.1996
(21) Application number: 92300877.5
(22) Date of filing: 31.01.1992
(51) Int. Cl.: C01B 13/11

(54) **Production of ozone**
Ozonerzeugung
Production d'ozone

(30) Priority: 05.02.1991 GB 9102395
(43) Date of publication of application: 12.08.1992
(73) Proprietor: The BOC Group plc, Windlesham Surrey GU20 6HJ (GB)
(72) Inventor: Wright, Christopher John, Rose Hill, Oxford OX4 4HY (GB); Jubb, Christopher, Guildford, Surrey GU1 1XE (GB)
(74) Representative: Wickham, Michael

(56) References cited:
- EP-A- 0 165 424
- GB-A- 955 825
- JP-B- 556 563
- JP-B- 5 444 679
- PATENT ABSTRACTS OF JAPAN vol. 013, no. 107 (C-576)14 March 1989 & JP-A-63 282 106
- PATENT ABSTRACTS OF JAPAN vol. 013, no. 423 (C-638)20 September 1989 & JP-A-1 160 807
- PATENT ABSTRACTS OF JAPAN vol. 012, no. 275 (C-516)29 July 1988 & JP-A-63 055 104
- W.J.MASSCHELEIN (ED.) 'Ozonisation manual for water and waste water treatment' 1982 , JOHN WILEY AND SONS

## Description

This invention relates to a method and apparatus for producing ozone.

Ozone is an oxidising agent which finds use in a large number of different industrial processes, for example in the production of organic chemicals, in the treatment of an aqueous waste material such as sewage or sewage sludge, or in the treatment of potable water.

Since ozone is a relatively unstable compared with other widely used industrial gases, it is produced in commercial practice at the site of its use. The production method used is the creation of a silent electrical discharge in a volume of gas comprising molecules of oxygen. The electrical discharge creates excited and unstable species of oxygen that react with unexcited oxygen molecules to form ozone. A conventional apparatus for producing ozone consists essentially of two electrodes which are spaced apart from one another. The apparatus has an inlet and an outlet for a gas comprising molecules of oxygen. In addition, a dielectric is housed between the electrodes. The high voltage alternating current is typically applied to the electrodes. At the same time, oxygen or a gas mixture containing oxygen molecules is caused to flow through the gas space. A high voltage electrical discharge is created. The discharge occurs without formation of sparks and without creating a highly luminous discharge. An ozonator which makes use of this principle may have electrodes in the form of parallel plates or concentric tubes. Examples of one known kind of ozonator are given in US-A-4 656 010. The invention that is the subject of this application is however applicable to any kind of ozonator in which the ozone is formed in a gaseous phase.

The gas that is fed to the ozonator is typically air. Alternatively oxygen-enriched air or pure oxygen may be used. Air costs less to supply than oxygen-enriched air or pure oxygen. The yield of ozone obtained, which is typically less than 10% by volume, does, however, increase with increasing oxygen partial pressure. Accordingly, some operators of ozonators prefer oxygen-enriched air or pure oxygen as a feed gas to air that is not enriched in oxygen. Commercial methods for the production of oxygen involve the removal of water vapour from incoming air. The presence of water vapour in the region of the electrical discharge have a markedly deleterious effect on the yield of ozone. Accordingly, it is desirable to dry air feed to an ozonator. This adds to the expense of using air and is another factor favouring the use of commercially pure oxygen as the feed gas.

A large proportion of the electrical energy that is expended in producing the discharge is dissipated as heat in the gas passing through the ozonator. Accordingly, it is generally necessary to provide cooling for the ozonator. In one typical construction of an ozonator the earthed electrode is cooled by the passage of water or other cooling liquid thereover. In addition, the live electrode may also have a cooling liquid passed therethrough. The use of the coolant prevents the electrodes themselves from overheating. In addition, the use of electrode coolants also moderates the temperature rise that takes place in the gas passing through the ozonator. This too is an advantageous effect since it is known that the rate of decomposition of ozone accelerates with increasing temperature and that the ozone yield accordingly falls with increasing temperature. It is nonetheless believed that the temperature of the gas fed to the ozonator is a factor of secondary importance. See, for example, page 26 of "Specifications and performance control for ozone generators", R Gerval, Chapter 6, "Ozonisation Manual for Water and Waste Water Treatment", (edited by Dr W J Masschelein), John Wiley and Sons (1982).

We believe when using oxygen as the feed gas to the ozonator, the inlet temperature of the gas is an important factor having a marked influence on the yield of ozone obtained.

GB-A-955 825 relates to an apparatus for producing ozone in which the electrodes of an ozone generator are located in the ullage space of a thermally insulated vessel containing a volume of liquid oxygen. In some instances, liquid oxygen is vaporised by bubbling through it gaseous oxygen from a cylinder or other supply means so as to form a flow of oxygen to be ozonised.

JP-A-63282106 discloses an ozone generator which is operatively associated with a mechanical refrigerator. The air fed to the ozone generator is cooled by indirect heat exchange with refrigerant being evaporated in the cooling coils of the refrigerator. The feed air is moist and the evaporator is operated at just above freezing point so as to avoid deposition of front upon its cooling surfaces.

According to the present invention there is provided a method of forming gaseous ozone, comprising passing a stream of gaseous oxygen into an ozonator and subjecting said oxygen to an electrical discharge so as to form gaseous ozone, wherein the temperature of the oxygen at the inlet to the ozonator is less than ambient temperature, characterised in that the stream of gaseous oxygen is formed at a required sub-ambient temperature by evaporating a spray of liquid oxygen in a precusory dry gaseous stream of air or oxygen, The temperature of the resulting sub-ambient temperature oxygen stream is sensed, and the spraying of the liquid oxygen controlled so as to maintain the sensed temperature at a chosen value or within chosen limits.

By the term oxygen, as used herein, is meant a gas or gas mixture containing at least 23% by volume of oxygen molecules. The oxygen preferably contains at least 90% by volume of oxygen molecules, being for example of oxygen-enriched air, and is most preferably commercially pure.

The invention also provides an ozonator for forming gaseous ozone by subjecting a stream of gaseous oxygen to an electrical discharge, the ozonator having an inlet for gaseous oxygen and an outlet for a stream of gaseous ozonated oxygen, characterised in that the ozonator has associated with it means for forming the gaseous stream of oxygen by spraying liquid oxygen into a precursory dry gaseous stream of air or oxygen whereby in use, the liquid oxygen is able to evaporate in the dry stream and thereby reduce the temperature of the dry stream to below ambient temperature, and the apparatus additionally includes a pipeline for conducting liquid oxygen to the chamber, a flow control valve in the pipeline, a sensor for sensing the temperature of the dry stream downstream of the chamber, and valve control means for adjusting the setting of the valve in response to signals generated by the sensor, whereby to maintain the sense of temperature at a chosen value or between chosen limits. In the method according to the invention the control of the spraying may be effected by operation of a flow-control valve in a pipeline through which the liquid oxygen is supplied. Preferably, the flow-control valve has means for adjusting its setting in response to a signal generated by a temperature sensor located downstream of the location or locations at which the liquid oxygen is introduced into the dry oxygen or dry air Such means make possible the accurate and sensitive control of the temperature of the gas stream entering the ozonator.

The evaporation of the liquid oxygen in the dry oxygen or dry air stream preferably takes place in a thermally-insulated chamber. Preferably, the chamber is vacuum-insulated. The pipeline through which the liquid oxygen is supplied is desirably insulated, preferably vacuum-insulated.

The stream of dry oxygen is preferably itself formed by vaporising liquid oxygen by indirect heat exchange. The liquid oxygen, may, for example, be passed through a vaporiser coil which is in heat exchange relationship with the ambient air. Although it is possible to create an oxygen stream at a temperature suitable for introduction into an ozonator in accordance with the invention simply by passing liquid oxygen through a vaporiser, difficulties can arise in obtaining such a stream at a precise temperature or in a temperature range having precise limits. On the other hand, such difficulties need not be encountered when supplying to the inlet of the ozonator a stream of oxygen that has been formed by evaporating liquid oxygen in a stream of gaseous oxygen.

The temperature of the stream of oxygen at the inlet to the ozonator is preferably the minimum that can be tolerated by the ozonator. There are two main considerations. First, the temperature should not be so low as to cause freezing of any cooling medium used to cool an electrode forming part of the ozonator. Second, it should not be so low as to cause any structural damage to the materials of the ozonator. Usually, the first consideration is the more critical one. The temperature of the oxygen stream at the inlet to the ozonator is desirably selected so as to avoid any freezing whatever of the cooling medium. If water the cooling medium, the inlet temperature of the oxygen stream is typically in the range + 5 to -20° C. Indeed, such is the heat generated by the discharge that it is generally possible to operate with a water coolant at oxygen inlet temperatures up to 10 or 20°C below freezing point. Even lower operating temperatures may be employed if a coolant having a lower freezing point than water is used to cool an electrode. Examples of such coolants are Freons (fluorinated hydrocarbons) and mineral oils.

If desired, a plurality of ozonators each may have distributed to their respective inlets a stream of oxygen at the desired temperature from a single source thereof.

By operating the ozonator with a stream of oxygen having an inlet temperature below ambient, it is possible to obtain a significant increase in the yield of ozone.

An apparatus and method according to the present invention will now be described by way of example with reference to the accompanying drawing, which is a schematic diagram of an ozonator having oxygen supply equipment associated therewith.

Referring to the drawing, there is shown a vacuum-insulated tank 2 containing a volume of liquid oxygen 4 under a superatmospheric oxygen pressure in an ullage space 6. There is a first outlet 8 for liquid oxygen from the tank 2. The outlet 8 communicates with a vaporiser 10 in the form of a coil of heat conductive metal. The downstream end of the coil 10 communicates with an oxygen pipeline 12 along which is located a pressure regulator 14.

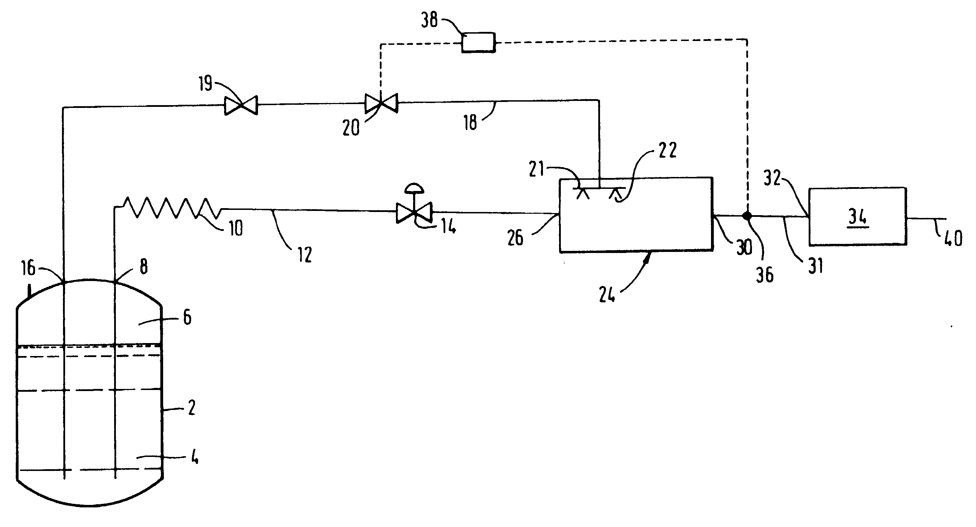

A second outlet 16 from the tank 2 is able to supply liquid oxygen to a vacuum-insulated pipeline 18. A first flow control valve 19 is located in the pipeline 18 and its setting determines the maximum flow rate of liquid oxygen through the pipeline 18. A second flow control valve 20 is also located in the pipeline 18. The pipeline 18 terminates in a header 21 having a plurality of spray orifices 22 which in turn terminate in a vacuum-insulated chamber 24. The chamber 24 also has an inlet 26 communicating with the pipeline 12 and an outlet 30 in which one end of a thermally-insulated conduit 31 terminates. If desired, the conduit 31 may be vacuum-insulated. The other end of the conduit 31 terminates in an inlet 32 to an ozonator 34. The ozonator 34 may be of any kind in which gaseous ozone is formed by creating an electrical discharge in a stream of gaseous oxygen. Such an ozonator is, for example, shown in Figure 1 of US-A-4 656 010.

A temperature sensor 36 is located in the outlet 30 of the chamber 24, or in the conduit 31. In use, the sensor is able to generate signals that are transmitted to a valve controller 38 that is able to adjust the setting of the valve 20 in the vacuum-insulated pipeline 18.

In operation of the apparatus, liquid oxygen flows out of the tank 2 through the first inlet 8 at a chosen rate and is vaporised by flow through the vaporiser 10. Resulting oxygen gas at a temperature in the order of the ambient temperature then flows along the pipeline 12 into the chamber 24.

Liquid oxygen is supplied from the tank 2 at a chosen rate through the second outlet 16 and flows along the vacuum-insulated pipeline 18. The liquid oxygen flows to the header 21 and is introduced into the chamber 24 in the form of a fine spray through the orifices 22. The liquid oxygen instantaneously vaporises on encountering the ambient temperature oxygen flowing into the chamber 24 from the pipeline 12. The resulting chilled gaseous oxygen stream then flows from the chamber 24 through the outlet 30 and into the ozonator 34 through the inlet 32. The temperature of the oxygen entering the ozonator 34 is sensed by the sensor 36. The valve controller 38 receives signals from the sensor 36 and is set so as to minimise any deviation from a set temperature (of, say, 0°C). Thus, if the sensor 36 indicates that temperature has fallen below 0°C, the controller 38 generates a signal to close the valve 20 or reduce the rate of flow of liquid oxygen therethrough. The sensed temperature then starts to rise and if it goes above 0°C, then the valve 20 is reopened or its setting changed so as to increase the flow rate of liquid oxygen therethrough. By this means, it is typically possible to maintain the temperature of the oxygen entering the ozonator 34 substantially at the set temperature. Ozonated oxygen leaves the ozonator 34 in gaseous state through an outlet 40.

The apparatus shown in the drawing may therefore be used to supply oxygen continuously at a chosen sub-ambient temperature to an ozonator.

## Claims

1. A method of forming gaseous ozone, comprising passing a gaseous stream of oxygen into an ozonator and subjecting said oxygen to an electrical discharge so as to form gaseous ozone, wherein the temperature of the oxygen at the inlet to the ozonator is less than ambient temperature, characterised in that the stream of gaseous oxygen is formed at a required sub-ambient temperature by evaporating a spray of liquid oxygen in a precursory dry gaseous stream of air or oxygen , the temperature of the resulting sub-ambient temperature oxygen stream is sensed, and the spraying of the liquid oxygen controlled so as to maintain the sensed temperature at a chosen value or within chosen limits.

2. A method as claimed in claim 1, in which the evaporation of the liquid oxygen takes place in a thermally-insulated chamber.

3. A method as claimed in claim 2, in which the chamber is vacuum-insulated.

4. Apparatus including an ozonator (34) for forming gaseous ozone by subjecting a gaseous stream of oxygen to an electrical discharge, the ozonator (34) having an inlet (32) for the said gaseous stream and an outlet (40) for a stream of ozonated oxygen, characterised in that the ozonator (34) has associated with it means (21, 22) for forming the gaseous stream of oxygen by spraying liquid oxygen into a precursory dry gaseous stream of air or oxygen, whereby, in use, the liquid oxygen is able to evaporate in the dry stream and thereby reduce the temperature of the dry stream to below ambient temperature, and the apparatus additionally includes a pipeline (18) for conducting liquid oxygen to the chamber (24), a flow control valve (20) in the pipeline (18), a sensor (36) for sensing the temperature of the dry stream downstream of the chamber (24), and valve control means (38) for adjusting the setting of the valve (20) in response to signals generated by the sensor (36), whereby to maintain the sensed temperature at a chosen value or between chosen limits.

5. Apparatus as claimed in claim 4, in which the spray means (21,22) is located in a thermally-insulated chamber (24).

6. Apparatus as claimed in claim 5, in which the said chamber (24) is vacuum-insulated.

## Patentansprüche

1. Verfahren zum Bilden von gasförmigem Ozon mit den Schritten, daß ein gasförmiger Sauerstoffstrom in einen Ozonerzeuger geleitet und der Sauerstoff einer elektrischen Entladung ausgesetzt wird, um gasförmiges Ozon zu bilden, worin die Temperatur des Sauerstoffes an dem Einlaß zu dem Ozonerzeuger niedriger als Umgebungstemperatur ist, dadurch gekennzeichnet, daß der gasförmige Sauerstoffstrom bei einer erforderlichen Unterumgebungstemperatur durch Verdampfen eines Sprühnebels von flüssigem Sauerstoff in einem vorbereitenden, trockenen, gasförmigen Luft- oder Sauerstoffstrom gebildet wird, die Temperatur des resultierenden Sauerstoffstromes unter Umgebungstemperatur wahrgenommen wird, und das Sprühen des flüssigen Sauerstoffs gesteuert wird, um die wahrgenommene Temperatur bei einem gewählten Wert oder innerhalb gewählter Grenzen aufrechtzuerhalten.

2. Verfahren nach Anspruch 1, in welchem die Verdampfung des flüssigen Sauerstoffs in einer thermisch isolierten Kammer stattfindet.

3. Verfahren nach Anspruch 2, in welchem die Kammer vakuumisoliert ist.

4. Vorrichtung mit einem Ozonerzeuger (34) zum Bilden von gasförmigem Ozon, indem ein gasförmiger Sauerstoffstrom einer elektrischen Entladung ausgesetzt wird, wobei der Ozonerzeuger (34) einen Einlaß (32) für den gasförmigen Strom und einen Auslaß (40) für einen ozonisierten Sauerstoffstrom aufweist, dadurch gekennzeichnet, daß dem Ozonerzeuger (34) Mittel (21, 22) zum Bilden des gasförmigen Sauerstoffstromes zugeordnet sind, indem flüssiger Sauerstoff in einen vorbereitenden, trockenen, gasförmigen Luft- oder Sauerstoffstrom gesprüht wird, wodurch im Gebrauch der flüssige Sauerstoff in der Lage ist, in den trockenen Strom zu verdampfen und dadurch die Temperatur des trockenen Stromes unter Umgebungstemperatur zu reduzieren, und wobei die Vorrichtung zusätzlich eine Rohrleitung (18) zum Leiten von flüssigem Sauerstoff zu der Kammer (24), ein Flußsteuerungsventil (20) in der Rohrleitung (18), einen Sensor (36) zum Wahrnehmen der Temperatur des trockenen Stromes stromabwärts von der Kammer (24) und Ventilsteuerungsmittel (38) zum Justieren der Einstellung des Ventils (20) in Antwort auf Signale, die von dem Sensor (36) erzeugt werden, umfaßt, wodurch die wahrgenommene Temperatur bei einem gewählten Wert oder zwischen gewählten Grenzen aufrechterhalten wird.

5. Vorrichtung nach Anspruch 4, in welcher das Sprühmittel (21, 22) in einer thermisch isolierten Kammer (24) angeordnet ist.

6. Vorrichtung nach Anspruch 5, in welcher die Kammer (24) vakuumisoliert ist.

## Revendications

1. Procédé de formation d'ozone gazeux, comprenant la circulation d'un courant gazeux d'oxygène dans un ozoniseur et l'application d'une décharge électrique audit oxygène pour la formation d'ozone gazeux, dans lequel la température de l'oxygène à l'entrée de l'ozoniseur est inférieure à la température ambiante, caractérisé en ce que le courant d'oxygène gazeux est formé à une température nécessaire inférieure à la température ambiante par évaporation d'une pulvérisation d'oxygène liquide dans un courant précurseur gazeux sec d'air ou d'oxygène, la température du courant résultant d'oxygène à température inférieure à la température ambiante est détectée, et la pulvérisation de l'oxygène liquide est réglée de manière que la température détectée soit maintenue à une valeur choisie ou entre des limites choisies.

2. Procédé selon la revendication 1, dans lequel l'évaporation de l'oxygène liquide s'effectue dans une chambre thermiquement isolée.

3. Procédé selon la revendication 2, dans lequel la chambre est isolée par le vide.

4. Appareil comprenant un ozoniseur (34) destiné à former de l'ozone gazeux par application d'une décharge électrique à un courant gazeux d'oxygène, l'ozoniseur (34) ayant une entrée (32) pour ledit courant gazeux et une sortie (40) pour un courant d'oxygène ozonisé, caractérisé en ce que l'ozoniseur (34) comporte, en association, un dispositif (21, 22) destiné à former le courant gazeux d'oxygène par pulvérisation d'oxygène liquide dans un courant précurseur gazeux sec d'air ou d'oxygène, si bien que, pendant l'utilisation, l'oxygène liquide peut s'évaporer dans le courant sec et peut ainsi réduire la température du courant sec à une valeur inférieure à la température ambiante et l'appareil comprend également une conduite (18) destinée à conduire l'oxygène liquide vers la chambre (24), une soupape (20) de réglage de débit placée dans la conduite (18), un capteur (36) destiné à détecter la température du courant sec en aval de la chambre (24), et un dispositif (38) de commande de soupape destiné à ajuster le réglage de la soupape (20) en fonction de signaux créés par le capteur (36), de manière que la température détectée soit maintenue à une valeur choisie ou entre des limites choisies.

5. Appareil selon la revendication 4, dans lequel le dispositif de pulvérisation (21, 22) est placé dans une chambre thermiquement isolée (24).

6. Appareil selon la revendication 5, dans lequel ladite chambre (24) est isolée par le vide.
